# EUROPEAN PATENT APPLICATION

(11) **EP 3 950 411 A1**
(43) Date of publication of application: **09.02.2022**
(21) Application number: 20869412.5
(22) Date of filing: 09.03.2020
(51) Int. Cl.: B60L 53/14, H02J 7/04

(54) **OBC AND DC/DC CIRCUIT, OBC, NEW ENERGY AUTOMOBILE, AND CHARGING PILE**

(30) Priority: 23.09.2019 CN 201910899755
(71) Applicant: Huawei Digital Power Technologies Co., Ltd., Shenzhen, Guangdong 518043 (CN)
(72) Inventor: WANG, Tianyu, Shenzhen, Guangdong 518129 (CN); CUI, Zhaoxue, Shenzhen, Guangdong 518129 (CN); LIU, Ren, Shenzhen, Guangdong 518129 (CN)
(74) Representative: Pfenning, Meinig & Partner mbB
(86) International application number: PCT/CN2020/078357
(87) International publication number: WO 2021/056976

(57) **Abstract**

An on-board charger (OBC) and DC/DC integrated circuit is disclosed, and is applied to the on-board charging field. A second secondary-side circuit (1023) in the OBC and DC/DC integrated circuit includes a first switching transistor (SR11) and a second switching transistor (SR21). A first terminal of a first secondary-side winding (L4) is coupled to a first electrode of the first switching transistor (SR11), a second terminal of the first secondary-side winding (L4) is coupled to both a first direct current port (P1) and a first terminal of a second secondary-side winding (L3), a second electrode of the first switching transistor (SR11) is coupled to a second direct current port (P2), and an anode of a body diode of the first switching transistor (SR11) is coupled to the second direct current port (P2). A second terminal of the second secondary-side winding (L3) is coupled to a first electrode of the second switching transistor (SR21), a second electrode of the second switching transistor (SR21) is coupled to the second direct current port (P2), and an anode of a body diode of the second switching transistor (SR21) is coupled to the second direct current port (P2). The second secondary-side circuit (1023) has a simple structure, to simplify a structure of an OBC circuit in an OBC.

## Description

This application claims priority to Chinese Patent Application No. 201910899755.2, filed with the China National Intellectual Property Administration on September 23, 2019 and entitled "OBC CIRCUIT, OBC, NEW ENERGY VEHICLE, AND CHARGING PILE", which is incorporated herein by reference in its entirety.

### TECHNICAL FIELD

This application relates to the technical field of new energy vehicles, and in particular, to an OBC and DC/DC integrated circuit, an OBC, a new energy vehicle, and a charging pile.

### BACKGROUND

With development of new energy vehicles, on-board chargers (on-board charger, OBC) are increasingly widely used. An OBC mainly includes an OBC circuit and a control circuit for driving the OBC circuit to work. Currently, most OBC use a magnetic integration solution. To be specific, the OBC circuit mainly includes a primary-side circuit, a first secondary-side circuit, and a second secondary-side circuit, and every two of the three circuits are magnetically coupled to each other. The control circuit may control, based on an output requirement of the first secondary-side circuit, the primary-side circuit to convert received charging electrical energy into alternating current electrical energy with a specific frequency, to supply one part of the alternating current electrical energy to the first secondary-side circuit, and to supply the other part of the alternating current electrical energy to the second secondary-side circuit. The control circuit may further control the first secondary-side circuit to convert the received alternating current electrical energy into direct current electrical energy, where the direct current electrical energy is usually high-voltage electrical energy and may be used for charging a power battery of a new energy vehicle. The control circuit may further control the second secondary-side circuit to convert the received alternating current electrical energy into direct current electrical energy, where the direct current electrical energy is usually low-voltage electrical energy and may be used for supplying power to a low-voltage battery (such as a lead-acid storage battery) or a load circuit in the new energy vehicle.

However, the frequency of the alternating current electrical energy provided by the primary-side circuit of the OBC is mainly affected by the output requirement of the first secondary-side circuit. Therefore, the second secondary-side circuit is usually designed with a complex circuit structure to convert the alternating current electrical energy obtained from the primary-side circuit into the direct current electrical energy applicable to the low-voltage battery or the load circuit.

In conclusion, a structure of the OBC circuit in the existing OBC is relatively complex. Therefore, the structure of the OBC circuit needs to be further studied.

### SUMMARY

In view of this, this application provides an OBC and DC/DC integrated circuit, an OBC, a new energy vehicle, and a charging pile. A second secondary-side circuit in an OBC circuit has a simple structure, to simplify a structure of the OBC circuit.

This application provides an on-board charger (OBC) and DC/DC integrated circuit, including a primary-side circuit, a first secondary-side circuit, and a second secondary-side circuit. The primary-side circuit is magnetically coupled to both the first secondary-side circuit and the second secondary-side circuit. The primary-side circuit is configured to: provide first alternating current electrical energy to the first secondary-side circuit, and provide second alternating current electrical energy to the second secondary-side circuit. The second secondary-side circuit includes a first secondary-side winding, a first switching transistor, a second secondary-side winding, a second switching transistor, a first direct current port, and a second direct current port. A first terminal of the first secondary-side winding is coupled to a first electrode of the first switching transistor, a second terminal of the first secondary-side winding is coupled to both the first direct current port and a first terminal of the second secondary-side winding, a second electrode of the first switching transistor is coupled to the second direct current port, and an anode of a body diode of the first switching transistor is coupled to the second direct current port. A second terminal of the second secondary-side winding is coupled to a first electrode of the second switching transistor, a second electrode of the second switching transistor is coupled to the second direct current port, and an anode of a body diode of the second switching transistor is coupled to the second direct current port.

This embodiment of this application provides the on-board charger (OBC) and DC/DC integrated circuit, including the primary-side circuit, the first secondary-side circuit, and the second secondary-side circuit. The primary-side circuit is magnetically coupled to both the first secondary-side circuit and the second secondary-side circuit. The primary-side circuit is configured to: provide the first alternating current electrical energy to the first secondary-side circuit, and provide the second alternating current electrical energy to the second secondary-side circuit. The second secondary-side circuit includes the first secondary-side winding, the first switching transistor, the second secondary-side winding, the second switching transistor, the first direct current port, and the second direct current port. The first terminal of the first secondary-side winding is coupled to the first electrode of the first switching transistor, the second terminal of the first secondary-side winding is coupled to both the first direct current port and the first terminal of the second secondary-side winding, the second electrode of the first switching transistor is coupled to the second direct current port, and the anode of the body diode of the first switching transistor is coupled to the second direct current port. The second terminal of the second secondary-side winding is coupled to the first electrode of the second switching transistor, the second electrode of the second switching transistor is coupled to the second direct current port, and the anode of the body diode of the second switching transistor is coupled to the second direct current port. According to the foregoing manner, the second secondary-side circuit includes the first secondary-side winding, the first switching transistor, the second secondary-side winding, and the second switching transistor, thereby simplifying the structure of the OBC circuit.

In a possible implementation, the second secondary-side circuit further includes a filter capacitor and a filter inductor; and one terminal of the filter inductor is coupled to the first terminal of the second secondary-side winding, the other terminal of the filter inductor is coupled to a first electrode of the filter capacitor, and a second electrode of the filter capacitor is coupled to the second direct current port.

According to a second aspect, an embodiment of this application further provides an on-board charger (OBC), including a control circuit and the OBC circuit provided in the first aspect. The control circuit is coupled to both the primary-side circuit and the first secondary-side circuit in the OBC circuit. The control circuit is configured to: control, in a first time period of a current first cycle, the primary-side circuit to generate zero-level electrical energy of primary-side alternating current electrical energy, control, in a second time period of the current first cycle, the primary-side circuit to generate positive-level electrical energy of the primary-side alternating current electrical energy, control, in a third time period of the current first cycle, the primary-side circuit to generate zero-level electrical energy of the primary-side alternating current electrical energy, and control, in a fourth time period of the current first cycle, the primary-side circuit to generate negative-level electrical energy of the primary-side alternating current electrical energy; and control the first secondary-side circuit to convert first alternating current electrical energy obtained from the primary-side circuit into first direct current electrical energy, where the first alternating current electrical energy is a part of the primary-side alternating current electrical energy. The control circuit is further coupled to both a control electrode of the first switching transistor and a control electrode of the second switching transistor in the second secondary-side circuit. The control circuit is further configured to: switch on the first switching transistor at a first time point in the first time period; switch off the first switching transistor at a second time point in the third time period, where the second time point is later than the first time point; switch on the second switching transistor at a third time point in the second time period; and switch on the second switching transistor at a fourth time point in the third time period, where the third time point is later than the fourth time point.

In a possible implementation, the OBC further includes a power factor correction (PFC) circuit, and the PFC circuit is coupled to the primary-side circuit. The PFC circuit is configured to receive charging electrical energy in an alternating current form, perform power factor correction on the charging electrical energy, convert charging electrical energy obtained after the power factor correction into primary-side direct current electrical energy, and provide the primary-side direct current electrical energy to the primary-side circuit. The primary-side circuit is specifically configured to: convert the primary-side direct current electrical energy into the primary-side alternating current electrical energy, provide the first alternating current electrical energy in the primary-side alternating current electrical energy to the first secondary-side circuit, and provide second alternating current electrical energy in the primary-side alternating current electrical energy to the second secondary-side circuit.

In a possible implementation, the primary-side circuit is a full-bridge inverter circuit or a half-bridge inverter circuit. The control circuit is further configured to: perform phase control-based voltage adjustment on the primary-side circuit to adjust an output voltage and transmit power of the second secondary-side circuit.

In a possible implementation, the control circuit is further configured to: adjust an external phase shift angle between the primary-side circuit and the first secondary-side circuit to adjust an output voltage and transmit power of the first secondary-side circuit, and adjust an internal phase shift angle of the primary-side circuit to adjust the output voltage and the transmit power of the second secondary-side circuit.

This embodiment of this application provides the on-board charger (OBC) and DC/DC integrated circuit, including the primary-side circuit, the first secondary-side circuit, and the second secondary-side circuit. The primary-side circuit is magnetically coupled to both the first secondary-side circuit and the second secondary-side circuit. The primary-side circuit is configured to: provide the first alternating current electrical energy to the first secondary-side circuit, and provide the second alternating current electrical energy to the second secondary-side circuit. The second secondary-side circuit includes the first secondary-side winding, the first switching transistor, the second secondary-side winding, the second switching transistor, the first direct current port, and the second direct current port. The first terminal of the first secondary-side winding is coupled to the first electrode of the first switching transistor, the second terminal of the first secondary-side winding is coupled to both the first direct current port and the first terminal of the second secondary-side winding, the second electrode of the first switching transistor is coupled to the second direct current port, and the anode of the body diode of the first switching transistor is coupled to the second direct current port. The second terminal of the second secondary-side winding is coupled to the first electrode of the second switching transistor, the second electrode of the second switching transistor is coupled to the second direct current port, and the anode of the body diode of the second switching transistor is coupled to the second direct current port. The control circuit is further configured to perform phase control-based voltage adjustment on the primary-side circuit to adjust the output voltage and the transmit power of the second secondary-side circuit. According to the foregoing manner, the second secondary-side circuit includes the first secondary-side winding, the first switching transistor, the second secondary-side winding, and the second switching transistor, thereby simplifying the structure of the OBC circuit. In addition, phase control-based voltage adjustment may be performed on the primary-side circuit to adjust the output voltage and the transmit power of the second secondary-side circuit, thereby simplifying a control policy.

The OBC provided in this embodiment of this application is also applicable to a scenario in which a power battery supplies power to a low-voltage load.

According to a third aspect, an embodiment of this application provides a power distribution apparatus, including the OBC according to any one of the second aspect or the implementations of the second aspect. The first secondary-side circuit in the OBC is coupled to a power battery, and is configured to provide first direct current electrical energy to the power battery. The first direct current port and the second direct current port of the second secondary-side circuit in the OBC are coupled to a low-voltage load, and are configured to provide second direct current electrical energy to the low-voltage load.

According to a fourth aspect, an embodiment of this application provides a new energy vehicle. The new energy vehicle includes a power battery, a low-voltage load, a motor, vehicle wheels, and the OBC according to any one of the second aspect or the implementations of the second aspect. The power battery is coupled to the first secondary-side circuit in the OBC charger, and the low-voltage load is coupled to the first direct current port and the second direct current port of the second secondary-side circuit in the OBC. The OBC is configured to provide first direct current electrical energy to the power battery, and provide second direct current electrical energy to the low-voltage load. The power battery is configured to drive the motor. The motor is configured to drive the vehicle wheels to rotate.

According to a fifth aspect, an embodiment of this application provides a charging pile. The charging pile includes a power supply circuit and a charging gun. The charging gun is configured to be coupled to the OBC according to any one of the second aspect or the implementations of the second aspect. The power supply circuit is configured to supply power to the OBC charger by using the charging gun.

The embodiments of this application provide the on-board charger (OBC) and DC/DC integrated circuit, including the primary-side circuit, the first secondary-side circuit, and the second secondary-side circuit. The primary-side circuit is magnetically coupled to both the first secondary-side circuit and the second secondary-side circuit. The primary-side circuit is configured to: provide the first alternating current electrical energy to the first secondary-side circuit, and provide the second alternating current electrical energy to the second secondary-side circuit. The second secondary-side circuit includes the first secondary-side winding, the first switching transistor, the second secondary-side winding, the second switching transistor, the first direct current port, and the second direct current port. The first terminal of the first secondary-side winding is coupled to the first electrode of the first switching transistor, the second terminal of the first secondary-side winding is coupled to both the first direct current port and the first terminal of the second secondary-side winding, the second electrode of the first switching transistor is coupled to the second direct current port, and the anode of the body diode of the first switching transistor is coupled to the second direct current port. The second terminal of the second secondary-side winding is coupled to the first electrode of the second switching transistor, the second electrode of the second switching transistor is coupled to the second direct current port, and the anode of the body diode of the second switching transistor is coupled to the second direct current port. According to the foregoing manner, the second secondary-side circuit includes the first secondary-side winding, the first switching transistor, the second secondary-side winding, and the second switching transistor, thereby simplifying the structure of the OBC circuit. In addition, phase control-based voltage adjustment may be performed on the primary-side circuit to adjust the output voltage and the transmit power of the second secondary-side circuit, thereby simplifying the control policy.

### BRIEF DESCRIPTION OF DRAWINGS

FIG. 1 is a schematic diagram of a system structure of a new energy vehicle;
FIG. 2 is a schematic structural diagram of an OBC;
FIG. 3 is a schematic structural diagram of an OBC and DC/DC integrated circuit;
FIG. 4 is a time sequence diagram of various control signals according to an embodiment of this application;
FIG. 5 is a time sequence diagram of various control signals according to an embodiment of this application; and
FIG. 6 is a schematic structural diagram of a power distribution apparatus according to an embodiment of this application.

### DESCRIPTION OF EMBODIMENTS

To make objectives, technical solutions, and advantages of this application clearer, the following further describes this application in detail with reference to the accompanying drawings. It should be noted that in the descriptions of this application, "at least one" means one or more, and "a plurality of" means two or more. In view of this, in embodiments of this application, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in the descriptions of this application, terms such as "first" and "second" are only used for differentiation for ease of description, but cannot be understood as indicating or implying relative importance, nor can be understood as indicating or implying an order.

It should be noted that "coupling" in the embodiments of this application refers to an energy transfer relationship. For example, that A is coupled to B means that energy can be transferred between A and B. There are a plurality of possible specific energy forms, for example, electrical energy and magnetic field potential energy. When electrical energy can be transferred between A and B, from a perspective of a circuit connection relationship, it indicates that A and B may be directly electrically connected to each other or may be indirectly electrically connected to each other via another conductor or circuit component. When magnetic field potential energy can be transferred between A and B, from a perspective of a circuit connection relationship, it indicates that electromagnetic induction may occur between A and B, so that the magnetic field potential energy can be transferred from A to B. In view of this, in the embodiments of this application, "magnetic coupling" specifically refers to a scenario in which energy can be transferred between A and B by using a magnetic field.

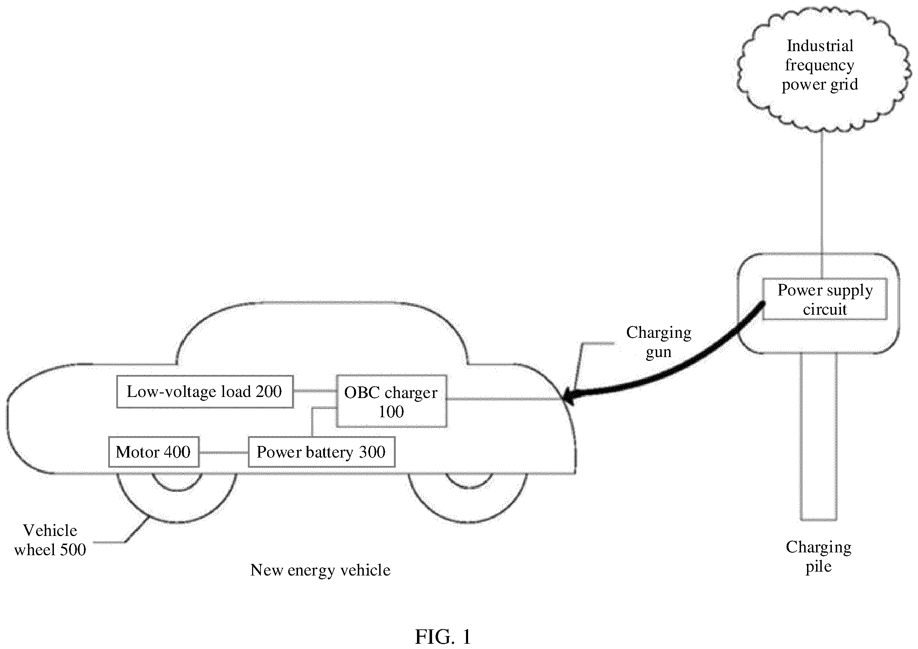

The following clearly and completely describes the technical solutions in the embodiments of this application with reference to the accompanying drawings in the embodiments of this application. Most new energy vehicles are driven by using electrical energy. FIG. 1 is a schematic diagram of an example of a system structure of a new energy vehicle. As shown in FIG. 1, the new energy vehicle mainly includes an on-board charger (OBC) 100, a low-voltage load 200, a power battery 300, a motor 400, and vehicle wheels 500. The power battery 300 is a large-capacity and high-power storage battery. The low-voltage load 200 is a functional circuit or a vehicle-mounted device inside the vehicle (new energy vehicle), and a rated voltage of the low-voltage load 200 is far lower than that of the power battery 300. For example, the low-voltage load 200 may include, but is not limited to, a lead-acid storage battery, a vehicle-mounted radio receiver, and a vehicle-mounted navigation device inside the new energy vehicle, which are not listed one by one in this embodiment of this application.

During traveling of the new energy vehicle, the power battery 300 can drive the motor 400 to work, and then the motor 400 drives the vehicle wheels 500 to rotate, so that the vehicle moves. In addition, the power battery 300 may supply power to the low-voltage load 200 by using the OBC 100, or supply power to an external load of the new energy vehicle (for example, another new energy vehicle) by using the OBC 100.

Usually, a charging pile may be used to charge the new energy vehicle. A relationship between the charging pile and the new energy vehicle is similar to a relationship between a filling station and a conventional vehicle. To be specific, the charging pile may "refuel" the new energy vehicle, that is, may charge the new energy vehicle.

As shown in FIG. 1, the charging pile mainly includes a power supply circuit and a charging gun. One terminal of the power supply circuit is coupled to an industrial frequency power grid, and the other terminal thereof is coupled to the charging gun via a cable. Generally, the power supply circuit may use the industrial frequency power grid as an alternating current power supply, receive alternating current electrical energy provided by the industrial frequency power grid, and convert the received alternating current electrical energy into charging electrical energy that is suitable for the new energy vehicle. An operator may insert the charging gun into a charging socket of the new energy vehicle, to make the charging gun coupled to the OBC 100 inside the vehicle, so that the power supply circuit of the charging pile can provide the charging electrical energy to the OBC 100 by using the charging gun.

The OBC 100 provides a part of the received charging electrical energy to the power battery 300, and then the power battery 300 stores this part of electrical energy. In addition, the OBC 100 may further provide the other part of the received charging electrical energy to the low-voltage load 200 for use by the low-voltage load 200. For example, the lead-acid storage battery in the low-voltage load 200 may store this part of electrical energy, and the vehicle-mounted radio receiver in the low-voltage load 200 may also use this part of electrical energy for working.

Usually, there are at least two working modes for the OBC 100 in the new energy vehicle: a charging mode and a discharging mode. Specifically, in the charging mode, the OBC 100 receives the charging electrical energy provided by the charging pile, and provides the received charging electrical energy to both the low-voltage load 200 and the power battery 300. In the discharging mode, the OBC 100 receives battery electrical energy provided by the power battery 300, and provides the battery electrical energy to the low-voltage load 200. In some scenarios, the OBC 100 may alternatively provide, to the external load of the vehicle, the battery electrical energy provided by the power battery 300.

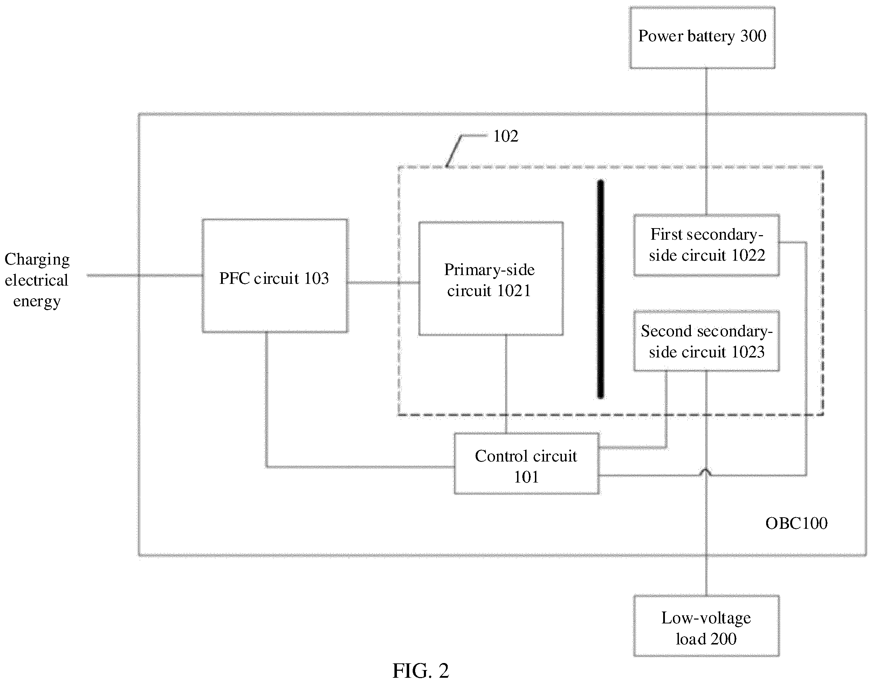

In the following, the OBC 100 is further described by using the charging mode as an example. FIG. 2 is a schematic structural diagram of an example of an OBC 100. As shown in FIG. 2, the OBC 100 mainly includes a control circuit 101 and an OBC circuit 102.

The OBC circuit 102 mainly includes a primary-side circuit 1021, a first secondary-side circuit 1022, and a second secondary-side circuit 1023, every two of which are magnetically coupled to each other. In other words, the primary-side circuit 1021 is magnetically coupled to both the first secondary-side circuit 1022 and the second secondary-side circuit 1023, and the first secondary-side circuit 1022 is magnetically coupled to both the primary-side circuit 1021 and the second secondary-side circuit 1023.

The control circuit 101 may be a microcontroller unit (microcontroller unit, MCU) inside the OBC 100. The control circuit 101 is coupled to all of the primary-side circuit 1021, the first secondary-side circuit 1022, and the second secondary-side circuit 1023. The control circuit 101 may generate various control signals to respectively control the primary-side circuit 1021, the first secondary-side circuit 1022, and the second secondary-side circuit 1023 to work.

In some possible implementations, the OBC 100 may further include a power factor correction (power factor correction, PFC) circuit 103. The PFC circuit may receive charging electrical energy in an alternating current form. Under control of the control circuit 101, the PFC circuit may perform power correction on the charging electrical energy in the alternating current form, convert charging electrical energy obtained after the power factor correction into primary-side direct current electrical energy, and provide the primary-side direct current electrical energy to the primary-side circuit 1021.

It can be understood that the power supply circuit in the charging pile in FIG. 1 can also convert the received alternating current electrical energy into charging electrical energy in a direct current form, and provide the charging electrical energy in the direct current form to the OBC 100. In view of this, the OBC 100 may further include a power distribution circuit (not shown in FIG. 2). A first terminal of the power distribution circuit is configured to receive charging electrical energy. The charging electrical energy may be in a direct current form or an alternating current form. A second terminal of the power distribution circuit is coupled to the PFC circuit, and a third terminal thereof is coupled to the primary-side circuit 1021. Under the control of the control circuit 101, the power distribution circuit may provide charging electrical energy in a direct current form to the primary-side circuit 1021 as primary-side direct current electrical energy, and provide charging electrical energy in an alternating current form to the PFC circuit; and the PFC circuit converts the charging electrical energy in the alternating current form into primary-side direct current electrical energy, and provides the primary-side direct current electrical energy to the primary-side circuit 1021. The power distribution circuit is disposed inside the OBC 100, so that the new energy vehicle not only can adapt to an alternating current charging pile, but also can adapt to a direct current charging pile. In this way, the new energy vehicle can be more conveniently charged.

The OBC circuit 102 may receive the primary-side direct current electrical energy from the PFC circuit or the power distribution circuit, provide one part of the direct current electrical energy to a power battery 300, and provide the other part of the direct current electrical energy to a low-voltage load 200. The low-voltage load 200 may be a low-voltage battery 201 (for example, a lead-acid storage battery), or may be a vehicle-mounted functional circuit 202 (for example, a vehicle-mounted audio device, a vehicle-mounted radio receiver, or a vehicle-mounted navigation device).

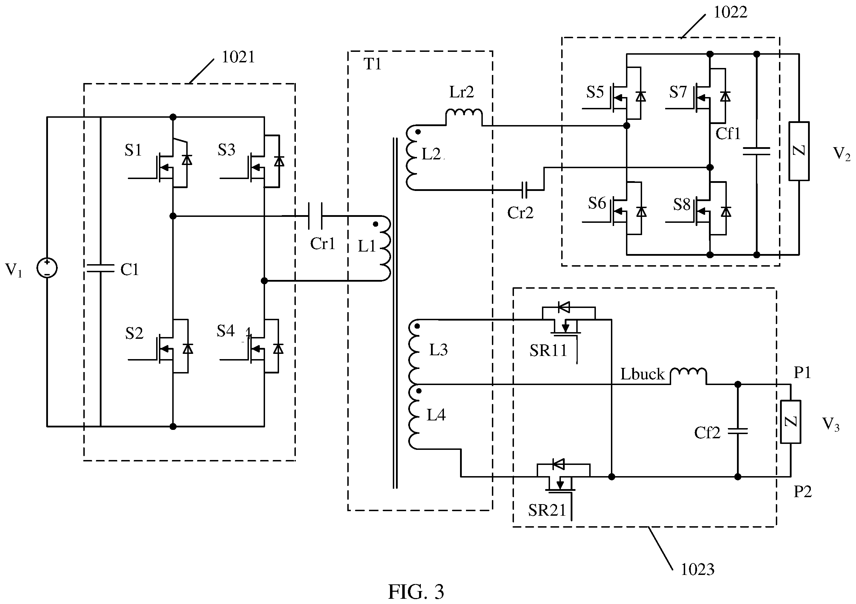

FIG. 3 is a schematic structural diagram of an example of an OBC and DC/DC integrated circuit 102 according to an embodiment of this application. In the following, a primary-side circuit 1021, a first secondary-side circuit 1022, and a second secondary-side circuit 1023 in the OBC circuit 102 are further described by using FIG. 3 as an example.

### Primary-side circuit 1021:

The primary-side circuit 1021 may convert received primary-side direct current electrical energy into primary-side alternating current electrical energy under control of a control circuit 101. As shown in FIG. 3, the primary-side circuit 1021 may be a full-bridge inverter circuit, and mainly includes a switching transistor S1, a switching transistor S2, a switching transistor S3, a switching transistor S4, and a primary-side winding L1. In a possible implementation, the primary-side circuit 1021 may further include at least one of a capacitor Cr1 and an inductor Lr1.

The switching transistor S1, the switching transistor S2, the switching transistor S3, and the switching transistor S4 form a bridge inverter circuit structure. Specifically, a first electrode of the switching transistor S1 is coupled to both a first electrode of the switching transistor S3 and a first direct current port of a PFC circuit (an output terminal of the PFC circuit is V1 in FIG. 3), a second electrode of the switching transistor S1 is coupled to both a first electrode of the switching transistor S2 and a first electrode of the capacitor Cr1, and a second electrode of the capacitor Cr1 is coupled to a first terminal of the primary-side winding L1. It should be noted that although not shown in FIG. 3, the primary-side circuit 1021 may further include the inductor Lr1, the second electrode of the capacitor Cr1 is coupled to a first terminal of the inductor Lr1, and a second terminal of the inductor Lr1 is coupled to the first terminal of the primary-side winding L1.

A second electrode of the switching transistor S3 is coupled to both a second terminal of the primary-side winding L1 and a first electrode of the switching transistor S4, and a second electrode of the switching transistor S2 is coupled to both a second electrode of the switching transistor S4 and a second direct current port of the PFC circuit. A control electrode of the switching transistor S1, a control electrode of the switching transistor S2, a control electrode of the switching transistor S3, and a control electrode of the switching transistor S4 are all coupled to the control circuit 101.

Generally, in two direct current ports used to output direct current electrical energy, one direct current port is a high-voltage port, and the other direct current port is a low-voltage port. The low-voltage port may be coupled to a grounding circuit, or in other words, an electric potential of the low-voltage port is 0. For example, in the first direct current port and the second direct current port of the PFC circuit, the second direct current port is a low-voltage port, and the second direct current port may be coupled to a grounding circuit of an OBC 100, or in other words, an electric potential of the second direct current port is 0. In this case, the second electrode of the switching transistor S2 and the second electrode of the switching transistor S4 may also be coupled to the grounding circuit, or in other words, the second electrode of the switching transistor S2 and the second electrode of the switching transistor S4 may be indirectly coupled to the PFC circuit via the grounding circuit. Direct current ports of the first secondary-side circuit 1022 and direct current ports of the second secondary-side circuit 1023 are similar. Details are not described in this embodiment of this application.

Based on the primary-side circuit 1021 shown in FIG. 3, the control circuit 101 may send periodic primary-side control signals to control the primary-side circuit 1021 to convert primary-side direct current electrical energy into primary-side alternating current electrical energy with specific cycle duration (frequency). It is assumed that each switching transistor of the primary-side circuit 1021 in FIG. 3 is an N-channel metal oxide semiconductor transistor (N-channel metal oxide semiconductor, NMOS).

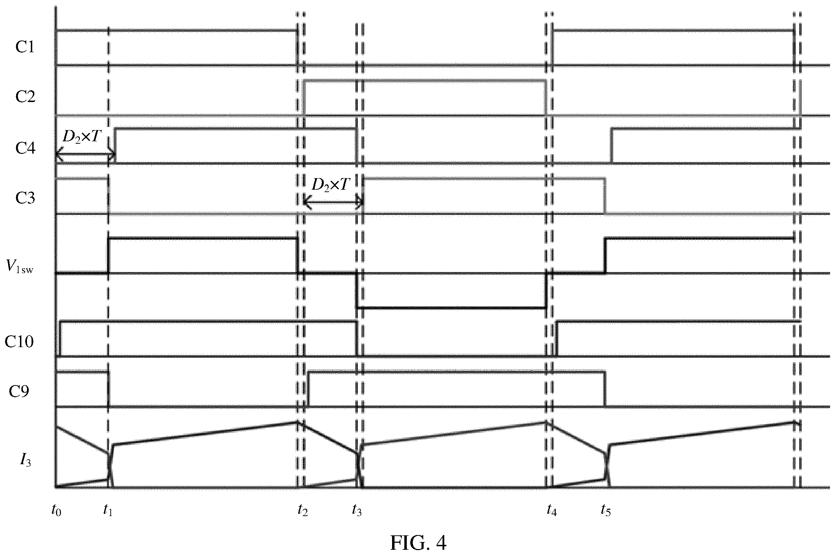

FIG. 4 is a time sequence diagram of an example of various control signals according to this embodiment of this application. A control signal C1 is used to control the switching transistor S1 to be switched on and off, a control signal C2 is used to control the switching transistor S2 to be switched on and off, a control signal C3 is used to control the switching transistor S3 to be switched on and off, and a control signal C4 is used to control the switching transistor S4 to be switched on and off. As shown in FIG. 4, the control signals C1 and C2 are complementary signals, or in other words, the control signals C1 and C2 have same cycle duration T and a same duty cycle (t/T), but the two control signals C1 and C2 do not overlap each other in a high-level time period t; and the control signals C3 and C4 are complementary signals, or in other words, the control signals C3 and C4 have same cycle duration T and a same duty cycle (t/T), but the two control signals C3 and C4 do not overlap each other in the high-level time period t.

It can be understood that in an ideal case, a falling edge of the control signal C1 and a rising edge of the control signal C2 correspond to a same time point, and a rising edge of the control signal C1 and a falling edge of the control signal C2 correspond to a same time point. As shown in FIG. 4, in consideration of a factor such as a switching delay, there may be a specific delay between the falling edge of the control signal C1 and the rising edge of the control signal C2, and there may also be a specific delay between the rising edge of the control signal C1 and the falling edge of the control signal C2.

It can be understood that in an ideal case, a falling edge of the control signal C3 and a rising edge of the control signal C4 correspond to a same time point, and a rising edge of the control signal C3 and a falling edge of the control signal C4 correspond to a same time point. As shown in FIG. 4, in consideration of a factor such as a switching delay, there may be a specific delay between the falling edge of the control signal C3 and the rising edge of the control signal C4, and there may also be a specific delay between the rising edge of the control signal C3 and the falling edge of the control signal C4.

In this embodiment of this application, a time interval between the rising edge of the control signal C1 and the rising edge of the control signal C4 is represented by a first time period (tO-tl), a time interval between the rising edge of the control signal C4 and the falling edge of the control signal C1 is represented by a second time period (t1-t2), a time interval between the falling edge of the control signal C1 and the falling edge of the control signal C4 is represented by a third time period (t2-t3), and a time interval between the falling edge of the control signal C4 and the rising edge of the control signal C1 is represented by a fourth time period (t3-t4).

In this embodiment of this application, during a time period (the first time period) in which the switching transistors S1 and S3 are switched on and the switching transistors S2 and S4 are switched off, the primary-side circuit 1021 outputs zero-level electrical energy; during a time period (the second time period) in which the switching transistors S1 and S4 are switched on and the switching transistors S2 and S3 are switched off, the primary-side circuit 1021 outputs positive-level electrical energy; during a time period (the third time period) in which the switching transistors S2 and S4 are switched on and the switching transistors S1 and S3 are switched off, the primary-side circuit 1021 outputs zero-level electrical energy; and during a time period (the fourth time period) in which the switching transistors S2 and S3 are switched on and the switching transistors S1 and S4 are switched off, the primary-side circuit 1021 outputs negative-level electrical energy.

It can be learned that the control circuit 101 controls the switching transistors S1, S2, S3, and S4 to be switched on and off, to make a direction of a current in the primary-side winding alternately change, to obtain the primary-side alternating current electrical energy from the primary-side winding. Voltage conversion performed on the primary-side alternating current electrical energy may be shown in FIG. 4.

The switching transistors S1 to S4 of the primary-side circuit all transmit waves with a duty cycle of 50%. The switching transistors S1 and S2 in a vertical direction transmit waves complementary with each other, and the switching transistors S3 and S4 in the vertical direction transmit waves complementary with each other. There is a specific time difference between time sequences of wave transmission in two bridge arms, and the time difference is defined as D2×T. T is a half cycle, and D2 is a primary-side phase shift ratio, as shown in FIG. 4.

As shown in FIG. 3, the first secondary-side circuit 1022 includes a secondary-side winding L2, and the second secondary-side circuit 1023 includes secondary-side windings L3 and L4. The primary-side circuit 1021 is magnetically coupled to both the first secondary-side circuit 1022 and the second secondary-side circuit 1023 by mainly magnetically coupling the primary-side winding L1 to the secondary-side winding L2, the secondary-side winding L3, and the secondary-side winding L4. Therefore, the primary-side alternating current electrical energy generated by the primary-side circuit 1021 in the primary-side winding L1 may be transferred to the secondary-side winding L2, the secondary-side winding L3, and the secondary-side winding L4 through electromagnetic induction.

### First secondary-side circuit 1022:

The first secondary-side circuit 1022 may receive a part of the primary-side alternating current electrical energy provided by the primary-side circuit 1021, namely first alternating current electrical energy. The first secondary-side circuit 1022 may convert the first alternating current electrical energy into first direct current electrical energy under control of the control circuit 101. The first direct current electrical energy may be used to charge a power battery 300. A first direct current port of the first secondary-side circuit 1022 is coupled to a positive electrode of the power battery 300, and a second direct current port thereof is coupled to a negative electrode of the power battery 300. As shown in FIG. 3, the first secondary-side circuit 1022 mainly includes a switching transistor S5, a switching transistor S6, a switching transistor S7, a switching transistor S8, and the secondary-side winding L2. In a possible implementation, the first secondary-side circuit 1022 may further include one or more of a capacitor Cr2, an inductor Lr2, and a capacitor Cf1.

A first electrode of the switching transistor S5 is coupled to a first electrode of the switching transistor S7, and a second electrode of the switching transistor S5 is coupled to both a second terminal of the secondary-side winding L2 and a first electrode of the switching transistor S6. A first terminal of the secondary-side winding L2 and the first terminal of the primary-side winding L1 are dotted terminals, and the first terminal of the secondary-side winding L2 is coupled to a first terminal of the inductor Lr2. A second terminal of the inductor Lr2 is coupled to a first electrode of the capacitor Cr2, and a second electrode of the capacitor Cr2 is coupled to a second electrode of the switching transistor S7. The first electrode of the switching transistor S7 is coupled to the first direct current port of the first secondary-side circuit 1022, the second electrode of the switching transistor S7 is coupled to a first electrode of the switching transistor S8, and a second electrode of the switching transistor S6 and a second electrode of the switching transistor S8 are coupled to the second direct current port of the first secondary-side circuit 1022. The capacitor Cf1 is connected in parallel between the first direct current port and the second direct current port of the first secondary-side circuit 1022.

Generally, the control signals C1 and C2 are determined by the control circuit 101 based on an output requirement of the first secondary-side circuit 1022. In other words, the control circuit 101 may change cycle duration, duty cycles, or other factors of the control signals C1 and C2 to adjust a voltage value of the first direct current electrical energy output by the first secondary-side circuit 1022. In this case, the switching transistors S5 to S8 in the first secondary-side circuit 1022 may be switched on and off synchronously with the switching transistors S1 to S4 in the primary-side circuit 1021. In other words, the control signal C1 may also be used to control the switching transistors S6 and S7 to be switched on and off, and the control signal C2 may also be used to control the switching transistors S5 and S8 to be switched on and off.

It should be noted that the above circuit structures of the primary-side circuit 1021 and the first secondary-side circuit 1022 are only an example. In a specific implementation structure, there are a plurality of possible implementations for the primary-side circuit 1021 and the first secondary-side circuit 1022, which are not listed one by one in this embodiment of this application.

### Second secondary-side circuit 1023:

It can be learned from the above process that the primary-side circuit 1021 and the first secondary-side circuit 1022 can implement synchronous rectification by using a same control signal. The primary-side circuit 1021 generates the primary-side alternating current electrical energy based on the output requirement of the first secondary-side circuit 1022, and provides second alternating current electrical energy in the primary-side alternating current electrical energy to the second secondary-side circuit 1023. However, an output requirement of the second secondary-side circuit 1023 is usually different from that of the first secondary-side circuit 1022. The second secondary-side circuit 1023 not only needs to rectify the second alternating current electrical energy, but also needs to perform voltage adjustment on the second alternating current electrical energy, to obtain second direct current electrical energy applicable to a low-voltage load 200. Therefore, a current circuit structure of the second secondary-side circuit 1023 is usually excessively complex, and needs to be further studied.

In view of this, an embodiment of this application provides a circuit structure of a second secondary-side circuit 1023. The circuit structure can implement rectification and voltage adjustment by using basic circuit components such as a triode and a diode. The circuit structure is simpler, helps to reduce production costs of an OBC 100, and also helps to improve energy utilization efficiency of the OBC 100. In the following, the second secondary-side circuit 1023 provided in this embodiment of this application is further described based on the following embodiments.

FIG. 3 includes a schematic structural diagram of the second secondary-side circuit 1023 provided in this embodiment of this application. As shown in FIG. 3, the second secondary-side circuit 1023 includes a first secondary-side winding (secondary-side winding L3), a first switching transistor (switching transistor SR11), a second secondary-side winding (secondary-side winding L4), a second switching transistor (switching transistor SR21), a first direct current port P1, and a second direct current port P2. The first direct current port P1 and the second direct current port P2 of the second secondary-side circuit 1023 are coupled to the low-voltage load 200, and the second secondary-side circuit 1023 may provide second direct current electrical energy to the low-voltage load 200 through the first direct current port P1 and the second direct current port P2.

As shown in FIG. 3, a first terminal of the secondary-side winding L3 is coupled to a first electrode of the switching transistor SR11, a second terminal of the secondary-side winding L3 is coupled to both the first direct current port P1 and a first terminal of the secondary-side winding L4, a second electrode of the switching transistor SR11 is coupled to the second direct current port P2, and an anode of a body diode of the switching transistor SR11 is coupled to the second direct current port P2; and a second terminal of the secondary-side winding L4 is coupled to a first electrode of the switching transistor SR21, a second electrode of the switching transistor SR21 is coupled to the second direct current port P2, and an anode of a body diode of the switching transistor SR21 is coupled to the second direct current port P2. The first terminal of the secondary-side winding L3 and the first terminal of the primary-side winding L1 are dotted terminals, and the first terminal of the secondary-side winding L4 and the first terminal of the primary-side winding L1 are also dotted terminals.

Based on the second secondary-side circuit 1023 shown in FIG. 3, assuming that all the switching transistors are NMOSs, the control circuit 101 may control, by using a control signal C9 in FIG. 4, the switching transistor SR11 to be switched on and off, and control, by using a control signal C10, the switching transistor SR21 to be switched on and off.

A cycle T1 (t0-t4) of the primary-side alternating current electrical energy is used as an example. A length of the cycle T1 is T. A cycle T2 is a next cycle of the cycle T1. In the cycle T1, tO-tl represents a first time period, t1-t2 represents a second time period, t2-t3 represents a third time period, and t3-t4 represents a fourth time period. In the first time period, no current flows through the primary-side winding. In the second time period, a current flows from the first terminal of the primary-side winding to the second terminal of the primary-side winding. In the third time period, no current flows through the primary-side winding. In the fourth time period, a current in the primary-side winding flows from the second terminal of the primary-side winding to the first terminal of the primary-side winding. To be specific, at a midpoint of a primary-side bridge arm, that is, in the winding L1, a three-level square wave including a positive-level signal, a negative-level signal, and a zero-level signal is generated. After the three-level square wave undergoes transformer coupling, two three-level voltages whose directions are opposite to each other are respectively generated in the windings L3 and L4.

If S9 and S10 are considered as rectifier diodes without a control function, before the inductor L2, full-wave rectification is performed to generate a voltage waveform shown by V3sL. Because a high current flows through a second secondary-side circuit, synchronous rectification control needs to be performed on SR11 and SR21. Time sequences corresponding to wave transmission performed by SR11 and SR21 are shown in FIG. 4. A current flowing through the winding L4 and the switching transistor SR21 and a current flowing through the winding L3 and the switching transistor SR11 are superimposed to form a current flowing through an inductor Lbuck.

Specifically, at a first time point t0 in the first time period, the control circuit 101 switches on the switching transistor SR21 by using the control signal C10. After the switching transistor SR21 is switched on at the first time point, the switching transistor SR11 is also switched on.

In the second time period (t1-t2), the primary-side winding outputs a positive voltage, and the positive voltage is coupled to the winding L4 to obtain a positive voltage; and SR21 is switched on, the winding L4 charges the inductor L2 and a load through SR21, and a current in the inductor is increased.

In the third time period (t2-t3), S2 and S4 in the primary-side circuit are switched on at the same time, making the primary-side winding L1 short-circuited, and then a zero level is output. At this stage, SR11 and SR21 are also switched on at the same time, and this is equivalent to forming two freewheeling paths for the inductor L2. One freewheeling path is SR11, SR21, L3, and L4, and this freewheeling path is also a current path of a conventional hard full-bridge. The other freewheeling path is SR21, S2, S4, and Cr1. Voltage drops on both the freewheeling paths are 0 (a power transistor on-state voltage drop and a parasitic resistance are ignored), and the current in the inductor L2 is decreased.

At a time point t3, the primary-side conversion circuit outputs a negative voltage, and the negative voltage is coupled to L4 to obtain a negative voltage, making a current in the winding rapidly decreased to zero. The current in the inductor L2 is rapidly transferred to another winding, namely L3, and the current is rapidly increased, as shown in FIG.4. During the time period t3-t4 and a time period t4-t5, the other winding repeats the commutation process in the time periods t1-t2 and t2-t3. Details are not described in this embodiment. Overall characteristics in this case are similar to those of a hard full-bridge circuit. A phase shift ratio D2 defined in this embodiment of this application is equivalent to 1-D in the hard full-bridge circuit. Therefore, an output voltage and transmit power of the second secondary-side conversion circuit can be controlled by controlling a value of D2, or in other words, phase control-based voltage adjustment may be performed on the primary-side circuit to adjust the output voltage and the transmit power of the second secondary-side circuit. A specific control formula may be as follows: V3=V1×n3/n1×(1-D2), where n3 represents a quantity of winding turns of the second secondary-side circuit, and n1 represents a quantity of winding turns of the primary-side circuit.

In this embodiment of this application, the control circuit is further configured to: adjust an external phase shift angle between the primary-side circuit and the first secondary-side circuit to adjust an output voltage and transmit power of the first secondary-side circuit, and adjust an internal phase shift angle of the primary-side circuit to adjust the output voltage and the transmit power of the second secondary-side circuit.

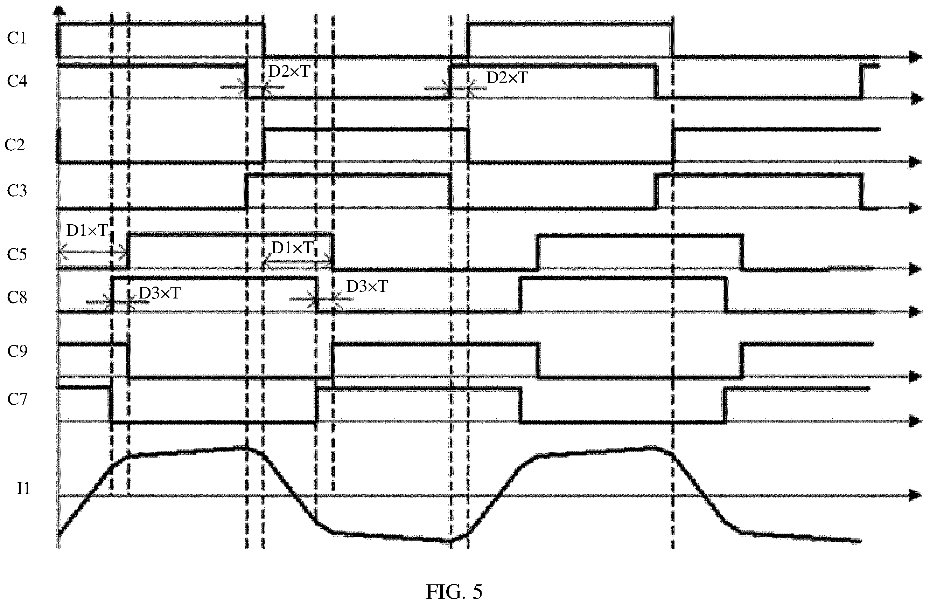

Refer to FIG. 5. The control circuit may adjust the external phase shift angle (D1) between the primary-side circuit and the first secondary-side circuit to adjust the output voltage and the transmit power of the first secondary-side circuit, and adjust the internal phase shift angle (D2) of the primary-side circuit to adjust the output voltage and the transmit power of the second secondary-side circuit.

In this embodiment of this application, a key to control over energy from the primary-side circuit to the first secondary-side circuit is the external phase shift angle between the primary-side circuit and the first secondary-side circuit, provided that the internal phase shift angle of the primary-side circuit and an internal phase shift angle of the first secondary-side circuit are appropriate and transfer of the energy from the primary-side circuit to the first secondary-side circuit is not affected. In this embodiment of this application, the internal phase shift angle of the primary-side circuit is extracted and used to control energy from the primary-side circuit to the second secondary-side circuit. This is equivalent to integration of topologies and control policies of a phase-shifted full-bridge and a dual active full-bridge. Based on logic for controlling the dual active full-bridge, power control on the second secondary-side circuit is implemented without adding any control signal.

In addition, in this embodiment of this application, when the primary-side circuit is faulty, there are two freewheeling paths for the inductor Lbuck. One freewheeling path is SR11, SR21, L3, and L4, and this freewheeling path is also a current path of a conventional hard full-bridge. The other freewheeling path is SR21, S4, S2, and Cr1. In this case, severe voltage stress can be avoided.

The embodiments of this application provide the on-board charger (OBC) and DC/DC integrated circuit, including the primary-side circuit, the first secondary-side circuit, and the second secondary-side circuit. The primary-side circuit is magnetically coupled to both the first secondary-side circuit and the second secondary-side circuit. The primary-side circuit is configured to: provide the first alternating current electrical energy to the first secondary-side circuit, and provide the second alternating current electrical energy to the second secondary-side circuit. The second secondary-side circuit includes the first secondary-side winding, the first switching transistor, the second secondary-side winding, the second switching transistor, the first direct current port, and the second direct current port. The first terminal of the first secondary-side winding is coupled to the first electrode of the first switching transistor, the second terminal of the first secondary-side winding is coupled to both the first direct current port and the first terminal of the second secondary-side winding, the second electrode of the first switching transistor is coupled to the second direct current port, and the anode of the body diode of the first switching transistor is coupled to the second direct current port. The second terminal of the second secondary-side winding is coupled to the first electrode of the second switching transistor, the second electrode of the second switching transistor is coupled to the second direct current port, and the anode of the body diode of the second switching transistor is coupled to the second direct current port. According to the foregoing manner, the second secondary-side circuit includes the first secondary-side winding, the first switching transistor, the second secondary-side winding, and the second switching transistor, thereby simplifying the structure of the OBC circuit. In addition, phase control-based voltage adjustment may be performed on the primary-side circuit to adjust the output voltage and the transmit power of the second secondary-side circuit, thereby simplifying a control policy.

The OBC circuit and the OBC provided in this application are described above by using the OBC in a charging mode as an example. It should be noted that the OBC circuit and OBC provided in the embodiments of this application are also applicable to a discharging mode.

Specifically, the power battery may input battery electrical energy in a direct current form to the first secondary-side circuit 1022. The control circuit may control the first secondary-side circuit 1022 to convert the battery electrical energy in the direct current form into battery electrical energy in an alternating current form. The control circuit may control the primary-side circuit 1021 to output the battery electrical energy obtained from the first secondary-side circuit 1022 to an external load of a new energy vehicle. For specific implementation, refer to conventional technologies. Details are not be described herein.

The control circuit may also control the second secondary-side circuit 1023 to convert battery electrical energy obtained from the first secondary-side circuit 1022 into second direct current electrical energy and provide the second direct current electrical energy to the low-voltage load.

The second secondary-side circuit 1023 obtains secondary-side alternating current electrical energy from the first secondary-side circuit 1022, and converts the secondary-side alternating current electrical energy into the second direct current electrical energy. The process is similar to that in the foregoing embodiment, and details are not repeated herein.

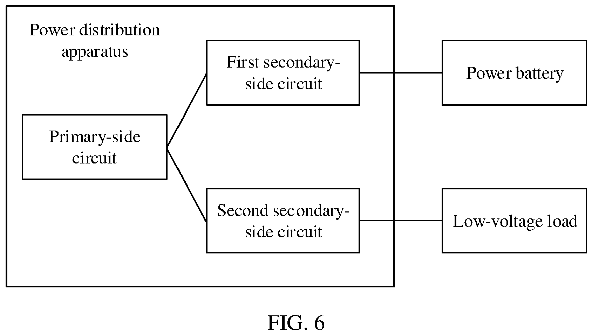

Refer to FIG. 6. FIG. 6 is a schematic structural diagram of a power distribution apparatus according to an embodiment of this application. As shown in FIG. 6, a first secondary-side circuit in the power distribution apparatus is coupled to a power battery, and is configured to provide first direct current electrical energy to the power battery; and a first direct current port and a second direct current port of a second secondary-side circuit in the power distribution apparatus are coupled to a low-voltage load, and are configured to provide second direct current electrical energy to the low-voltage load.

It should be noted that the power distribution apparatus in this embodiment may be a power distribution unit (power distribution unit, PDU). The power distribution apparatus in this embodiment may be used in a vehicle to distribute electrical energy to the vehicle, or may be used in another power apparatus to which an OBC charging circuit is applied. This is not limited in this application.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of the embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for this application, software program implementation is a better implementation in most cases. Based on such an understanding, the technical solutions of this application essentially or the part contributing to the conventional technology may be implemented in a form of a software product. The software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in the embodiments of this application.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. An on-board charger (OBC) and direct current/direct current (DC/DC) integrated circuit, comprising a primary-side circuit, a first secondary-side circuit, and a second secondary-side circuit, wherein the primary-side circuit is magnetically coupled to both the first secondary-side circuit and the second secondary-side circuit;
the primary-side circuit is configured to: provide first alternating current electrical energy to the first secondary-side circuit, and provide second alternating current electrical energy to the second secondary-side circuit;
the second secondary-side circuit comprises a first secondary-side winding, a first switching transistor, a second secondary-side winding, a second switching transistor, a first direct current port, and a second direct current port; a first terminal of the first secondary-side winding is coupled to a first electrode of the first switching transistor, a second terminal of the first secondary-side winding is coupled to both the first direct current port and a first terminal of the second secondary-side winding, a second electrode of the first switching transistor is coupled to the second direct current port, and an anode of a body diode of the first switching transistor is coupled to the second direct current port; and
a second terminal of the second secondary-side winding is coupled to a first electrode of the second switching transistor, a second electrode of the second switching transistor is coupled to the second direct current port, and an anode of a body diode of the second switching transistor is coupled to the second direct current port.

2. The OBC and DC/DC integrated circuit according to claim 1, wherein the second secondary-side circuit further comprises a filter capacitor and a filter inductor; and
one terminal of the filter inductor is coupled to the first terminal of the second secondary-side winding, the other terminal of the filter inductor is coupled to a first electrode of the filter capacitor, and a second electrode of the filter capacitor is coupled to the second direct current port.

3. An on-board charger (OBC), comprising a control circuit and the on-board charger (OBC) and direct current/direct current (DC/DC) integrated circuit according to claim 1 or 2, wherein the control circuit is coupled to both the primary-side circuit and the first secondary-side circuit in the OBC circuit;
the control circuit is configured to:
control, in a first time period of a current first cycle, the primary-side circuit to generate zero-level electrical energy of primary-side alternating current electrical energy, control, in a second time period of the current first cycle, the primary-side circuit to generate positive-level electrical energy of the primary-side alternating current electrical energy, control, in a third time period of the current first cycle, the primary-side circuit to generate zero-level electrical energy of the primary-side alternating current electrical energy, and control, in a fourth time period of the current first cycle, the primary-side circuit to generate negative-level electrical energy of the primary-side alternating current electrical energy; and
control the first secondary-side circuit to convert first alternating current electrical energy obtained from the primary-side circuit into first direct current electrical energy, wherein the first alternating current electrical energy is a part of the primary-side alternating current electrical energy; and
the control circuit is further coupled to both a control electrode of the first switching transistor and a control electrode of the second switching transistor in the second secondary-side circuit, and the control circuit is further configured to:
switch on the first switching transistor at a first time point in the first time period;
switch off the first switching transistor at a second time point in the third time period, wherein the second time point is later than the first time point;
switch on the second switching transistor at a third time point in the second time period; and
switch on the second switching transistor at a fourth time point in the third time period, wherein the third time point is later than the fourth time point.

4. The OBC according to claim 3, wherein the OBC further comprises a power factor correction (PFC) circuit, and the PFC circuit is coupled to the primary-side circuit;
the PFC circuit is configured to: receive charging electrical energy in an alternating current form, perform power factor correction on the charging electrical energy, convert charging electrical energy obtained after the power factor correction into primary-side direct current electrical energy, and provide the primary-side direct current electrical energy to the primary-side circuit; and
the primary-side circuit is specifically configured to:
convert the primary-side direct current electrical energy into the primary-side alternating current electrical energy, provide the first alternating current electrical energy in the primary-side alternating current electrical energy to the first secondary-side circuit, and provide second alternating current electrical energy in the primary-side alternating current electrical energy to the second secondary-side circuit.

5. The OBC according to claim 3 or 4, wherein the primary-side circuit is a full-bridge inverter circuit or a half-bridge inverter circuit; and
the control circuit is further configured to:
perform phase control-based voltage adjustment on the primary-side circuit to adjust an output voltage and transmit power of the second secondary-side circuit.

6. The OBC according to claim 5, wherein the control circuit is further configured to: adjust an external phase shift angle between the primary-side circuit and the first secondary-side circuit to adjust an output voltage and transmit power of the first secondary-side circuit, and adjust an internal phase shift angle of the primary-side circuit to adjust the output voltage and the transmit power of the second secondary-side circuit.

7. A power distribution apparatus, comprising the OBC according to any one of claims 3 to 6, wherein
the first secondary-side circuit in the OBC is coupled to a power battery, and is configured to provide first direct current electrical energy to the power battery; and the first direct current port and the second direct current port of the second secondary-side circuit in the OBC are coupled to a low-voltage load, and are configured to provide second direct current electrical energy to the low-voltage load.

8. A new energy vehicle, comprising a power battery, a low-voltage load, a motor, vehicle wheels, and the OBC according to any one of claims 3 to 6, wherein
the power battery is coupled to the first secondary-side circuit in the OBC, and the low-voltage load is coupled to the first direct current port and the second direct current port of the second secondary-side circuit in the OBC;
the OBC is configured to provide first direct current electrical energy to the power battery, and provide second direct current electrical energy to the low-voltage load;
the power battery is configured to drive the motor; and
the motor is configured to drive the vehicle wheels to rotate.

9. A charging pile, comprising a power supply circuit and a charging gun, wherein
the charging gun is configured to be coupled to the OBC according to any one of claims 3 to 6; and
the power supply circuit is configured to supply power to the OBC by using the charging gun.
